(19) Europäisches Patentamt
European Patent Office
Office européen des brevets

(11) **EP 3 961 340 B1**

(12) **EUROPEAN PATENT SPECIFICATION**

(45) Date of publication and mention
of the grant of the patent:
**31.05.2023 Bulletin 2023/22**

(21) Application number: **20193816.4**

(22) Date of filing: **01.09.2020**

(51) International Patent Classification (IPC):
***G01C 21/16*** *(2006.01)*   ***G05D 1/02*** *(2020.01)*

(52) Cooperative Patent Classification (CPC):
**G05D 1/0278; G01C 21/1652; G05D 1/024;**
**G05D 1/0272;** G05D 2201/021

(54) **UNDERGROUND WORKSITE VEHICLE POSITIONING CONTROL**

VORRICHTUNG ZUR STEUERUNG DER POSITIONIERUNG EINES FAHRZEUGS AN EINER UNTERGRUNDBAUSTELLE

COMMANDE DE POSITIONNEMENT DE VÉHICULES DE CHANTIER SOUTERRAIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.03.2022 Bulletin 2022/09**

(73) Proprietor: **Sandvik Mining and Construction Oy**
**33330 Tampere (FI)**

(72) Inventors:
• **HÄMÄLÄINEN, Jyrki**
**33311 Tampere (FI)**
• **TARIQ, Usama**
**02940 Espoo (FI)**

(74) Representative: **Sandvik**
**Sandvik Mining and Construction Oy**
**Patent Department**
**PL 100**
**33311 Tampere (FI)**

(56) References cited:
**EP-A2- 2 169 507**      **WO-A1-2015/106799**
**US-A1- 2018 074 201**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD

The present invention relates to positioning of vehicles, and in particular to vehicles operating at worksites comprising an underground tunnel portion and a surface portion.

BACKGROUND

Mining or construction excavation worksites, such as hard rock or soft rock mines, may comprise areas for automated operation of mobile vehicles, herein referred to as vehicles. A vehicle may be an unmanned, e. g. remotely controlled from a control room, or a manned vehicle, i.e. operated by an operator in a cabin of the mobile vehicle. An automated vehicle operating in an automatic mode may operate independently without external control but may be taken under external control at certain operation areas or conditions, such as during states of emergencies.

Vehicles may comprise one or more sensors for scanning environment of the vehicle, to detect obstacles and/or tunnel wall surface, for example. Such sensors, such as two-dimensional laser scanners, may be referred to as environment scanning sensors. Position tracking may be arranged particularly in underground mines on the basis of scanning data from the sensor(s) and a predefined environmental model. WO2015106799 discloses a system for scanning surroundings of a vehicle for producing data to determining position and orientation of the vehicle. The vehicle is provided with a reference point cloud data of the mine. The control unit is configured to match second point cloud data produced by a scanning device of the vehicle to the reference point cloud data in order to determine position data of the vehicle.

US2017122741 discloses a construction machine control system comprising a position measurement unit that specifies position of the construction machine by comparing detection result of a non-contact sensor and map information when a determination unit determines that the error in the position detected by a position detection unit exceeds the predetermined error.

US2018074201 discloses a control system provided with a position detection device which detects a position of a work machine, a contactless sensor which detects an object around the work machine in a contactless manner, a position calculation unit which calculates a position of the work machine on the basis of at least map data indicating a position of the object and detection data of the contactless sensor, and a diagnosis unit which compares the position of the work machine derived from detection data of the position detection device and the position of the work machine calculated by the position calculation unit and diagnoses that there is an abnormality in either the detection data of the position detection device or a calculation result of the position calculation unit.

EP2169507 discloses a method for controlling a vehicle, wherein a dynamic condition is identified and the vehicle is controlled using a knowledge base comprising a fixed knowledge base and a learned knowledge base.

Wo2018215092 discloses An Energetically Autonomous, Sustainable and Intelligent Robot (ESAIR) moving within a given working area.

SUMMARY

The invention is defined by the features of the independent claims. Some specific embodiments are defined in the dependent claims.

According to a first aspect of the present invention, there is provided an apparatus, being configured to or comprising means configured for performing at least:defining first confidence level information for position information by a satellite based first positioning source of a vehicle at a worksite comprising an underground tunnel system, defining second confidence level information for position information by a second positioning source configured to position the vehicle based on environment scanning, selecting a positioning correction source for the vehicle on the basis of the first confidence level information and the second confidence level information, and applying the selected positioning correction source for correcting dead-reckoning based positioning for the vehicle.

According to a second aspect of the present invention, there is provided a method for controlling autonomous operation of a vehicle, comprising: defining first confidence level information for position information by a satellite based first positioning source of a vehicle at a worksite comprising an underground tunnel system, defining second confidence level information for position information by a second positioning source configured to position the vehicle based on environment scanning, selecting a positioning correction source for the vehicle on the basis of the first confidence level information and the second confidence level information, and applying the selected positioning correction source for correcting dead-reckoning based positioning for the vehicle.

According to a third aspect, there is provided an apparatus comprising at least one processor, at least one memory including computer program code, the at least one memory and the computer program code being configured to, with the at least one procesor core, provide the means for the apparatus and/or cause the apparatus at least to perform the method or an embodiment of the method.

According to a fourth aspect, there is provided a computer program, a computer program product or (a non-tangible) computer-readable medium comprising computer program code for, when executed in a data processing apparatus, to cause the apparatus to perform the method or an embodiment thereof.

BRIEF DESCRIPTION OF THE DRAWINGS

FIGURE 1 illustrates an example of a vehicle at a worksite comprising an underground tunnel system;

FIGURE 2 illustrates a method according to at least some embodiments;

FIGURE 3 illustrates control architecture for controlling positioning according to some embodiments;

FIGURE 4 illustrates GPS error estimation;

FIGURE 5 illustrates a top view example of a vehicle and a worksite portion; and

FIGURE 6 illustrates an example apparatus capable of supporting at least some embodiments.

EMBODIMENTS

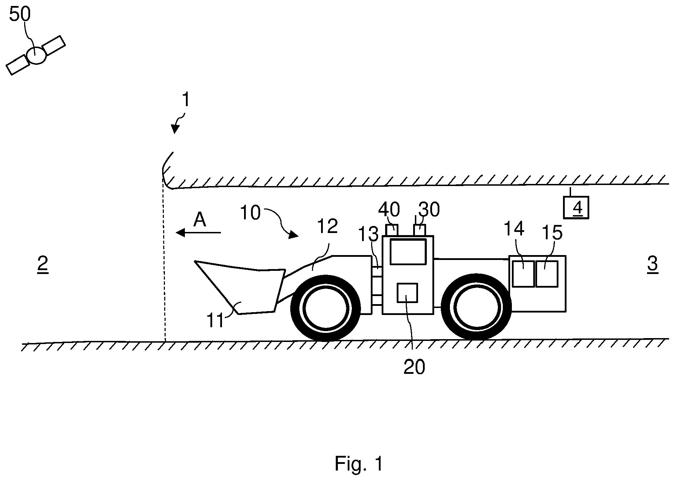

Figure 1 illustrates a simplified example of a worksite 1, in the present example comprising a surface portion 2 and an underground (tunnel) portion 3. The worksite may comprise an ore mine or a construction site, such as a railway or road tunnel site.

A vehicle 10 may operate at the worksite 1 and drive between the surface portion 2 and the underground portion 3. An area in which the tunnel ends and surface portion starts may be a (underground-surface) transition area. The vehicle is in the present example a loader or a load and haul (LHD) vehicle comprising a bucket 11 connected to a boom 12. The vehicle 10 may be an articulated vehicle comprising two sections connected by a joint 13. However, it will be appreciated that application of the presently disclosed features are not limited to any particular type of vehicle which may be used at excavation worksites. Some other examples of such vehicle include lorries, dumpers, vans, mobile rock drilling or milling rigs, or mobile reinforcement machines.

The vehicle 10 typically comprises a system 14 of pumps for generating hydraulic pressure for operating various parts of the machine, such as lifting the boom 12, turning the bucket 11, etc. The vehicle 10 may comprise one or more other sources of energy, such as an accumulator, a hydrogen container, a fuel tank, etc. The vehicle 10 may comprise a motor 15, such as a combustion engine or an electric motor. Power from the motor 15 may be provided by a crank shaft to front and/or rear wheels either directly or via a gear box.

The vehicle 10 comprises at least one control unit 20 configured to control at least some functions and/or actuators of the vehicle. The control unit 20 may comprise one or more computing units/processors executing computer program code stored in memory. The control unit may be connected to one or more other control units of a control system of the vehicle, in some embodiments by a controller area network (CAN) bus. The control unit may comprise or be connected to a user interface with a display device as well as operator input interface for receiving operator commands and information to the control unit.

The control unit 20 may be configured to control at least positioning control related operations, but may be configured to perform also other control operations, such as autonomous operation control. There may be one or more other control units in the vehicle for controlling other operations. It is to be appreciated that the control unit 20 may be configured to perform at least some of the below illustrated features, or a plurality of control units or controllers may be applied to perform these features. There may be further operations modules or functions performed by the control unit(s), e.g. an automatic positioning mode selection function, at least one positioning unit/module/function, and/or a navigation function. It is to be appreciated that at least some of the control functionality could be implemented even outside the vehicle, e.g. at the worksite control system.

The vehicle 10 may comprise a wireless communication device, by which the control unit 20 and/or another unit of control system of the vehicle 10 may establish a data transmission connection to another (second) control system external to the vehicle by utilising a wireless connection provided by a base station or access node 4. The communication device may thus be connected to a communications system of the worksite, such as a wireless access system comprising a wireless local area network (WLAN) and/or a cellular communications network (e.g. a 4G, 5G or another generation cellular network). Non-terrestrial communication by a non-terrestrial transceiver may be configured via a satellite, e.g. by a Third Generation Partnership Project (3GPP) 5G based non-terrestrial network (NTN).

The external control system may comprise or be connected to further network(s) and/or data processing system(s), such as a worksite management system, a cloud service, a data analytics device/system, an intermediate communications network, such as the internet, etc. The system may comprise or be connected to further device(s) or control unit(s), such as a handheld user unit, a vehicle unit, a worksite management device/system, a remote control and/or monitoring device/system, data analytics device/system, sensor system/device, etc.

The vehicle 10 may be unmanned. Thus, the user interface may be remote from the vehicle and the vehicle may be remotely controlled by an operator in the tunnel, or in control room at the mine area, or even long distance away from the mine via communications network(s). A control unit outside the vehicle 10, for example in the worksite management system may be configured to perform some of the below illustrated features. The vehicle 10 may be an automated vehicle, which in an autonomous operating or driving mode may operate/drive independently without requiring continuous user control but which may be taken under external control during states of emergencies, for example. When the vehicle is in a manual driving mode, an operator drives the vehicle manually, by remote control or locally at the vehicle by operator controls. The operator may set the vehicle into a (default) automatic driving mode in which the vehicle drives automatically a specified route, e.g. between a loading point and a dump shaft. Below disclosed positioning control related features may be applied when the vehicle 10 operates in the automatic driving mode, and/or for manually operated vehicles or when the vehicle is in the manual operating mode.

The vehicle 10 comprises a positioning device or unit 30 for satellite-based positioning, which may also be referred to as satellite positioning unit, or as in the present example embodiments below, as Global Navigation Satellite System (GNSS) device. GNSS generally refers to satellite positioning systems that are operating or planned, such as GPS, GLONASS (Russia), Galileo (European Union), BeiDou (China), the Indian Regional Navigation Satellite System (IRNSS), QZSS (Japan). When the vehicle 10 is positioned in the surface portion 2, the GNSS device may have a line of sight to a satellite 50, receive GNSS signal and define position for the vehicle based on the GNSS signal. The GNSS device and the wireless communication device may be implemented in a single device.

In an embodiment, the positioning unit 30 includes a GPS receiver and an antenna for the GPS. When the position of the antenna is detected, the position of the vehicle 10 is detected. The antenna receives a radio wave from a GPS satellite. The antenna outputs an electric signal based on the received radio wave to the GPS receiver which calculates the position of the antenna based on the signal. It is to be noted that configuration of multiple antennas may be used, which may enable to calculate more accurate position information and also orientation information of the vehicle.

The vehicle 10 comprises one or more scanning units, or scanners 40, configured to perform scanning of environment around the vehicle. For example, the vehicle 10 may comprise a front scanner configured to scan environment towards normal forward driving direction A (and naturally to sides within reach of the scanner). The vehicle may also comprise a rear scanner configured to scan the environment towards direction opposite to A, i. e. backwards of the vehicle.

In some embodiments, the scanning results are applied to detect position and orientation of the vehicle and one or more further elements thereof, such as the scanner 40 or the bucket 11. The control unit 20, or alternatively another control/computation unit in the vehicle, may compare operational scanned tunnel profile data to reference profile data stored in an environment model and position the vehicle on the basis of finding a match in the environment model to position the vehicle and thus operate as scanning position source. The environment model may be obtained based on scanning by (teach-)driving the vehicle or other type of survey, for example.

In an embodiment, the scanner 40 may be a 2D scanner configured to monitor tunnel walls at desired height, for example. In another embodiment, the scanner 40 is a 3D scanner, in which case 3D scanning data or point cloud data is produced and applied for positioning the vehicle. Point cloud data generated on the basis of scanning may be applied for generating and updating an environment model, such as an underground tunnel model, which may be applied for positioning the vehicle at the worksite. The vehicle 10 may comprise a simultaneous localization and mapping (SLAM) unit configured to both position the vehicle and (augment) map the environment on the basis of (2D or 3D) scanning information while the vehicle is driving.

A control unit, e.g. the control unit 20, may execute a point cloud matching functionality for matching operational (scanned) point cloud data (being scanned by the scanner(s) 40) to environment model point cloud data, i.e. reference point cloud data. Position and direction of the scanning device and/or another interest point of the vehicle, such as the (leading edge of the) bucket 11, may be determined in worksite coordinate system on the basis of the detected matches between the operational point cloud data and the reference cloud data. The (2D or 3D) scanner may be a laser scanner, but it is to be appreciated that other scanner configurations and sensor types, appropriate for vehicles at underground worksite conditions may be applied instead of or in addition to laser sensors.

A driving plan, or a route plan, may define a route to be driven by the vehicle 10 and may be used as an input for automatic driving control of the vehicle. The plan may be generated offline and off-site, for example in an office, or on-board the vehicle e.g. by a teaching drive. The plan may define a start point, an end point, and a set of route points for the automatic drive. Such plan may be sent via a wired or wireless connection to, or otherwise loaded to the vehicle, to a memory of the vehicle for access by the control unit 20 or another unit of the vehicle controlling navigation of the vehicle along the route. In another embodiment, route points are not pre-defined, but the mine vehicle defines path and steering control to avoid obstacles during autonomous driving towards a destination point.

In some embodiments positioning of the vehicle 10 is performed by dead-reckoning based positioning. The control unit 20 (or another control unit of the vehicle) may perform a dead reckoning algorithm configured to accumulate the vehicle's travelled distance and heading on the basis of input signal(s) indicative of vehicle wheel rotation and relative heading. Dead-reckoning (DR) refers generally to a method in which position of the vehicle 10 is estimated based on the orientation of the vehicle, for example, calculated from integration of the angular velocity measured by a gyro, and the moving distance, for example, integration of the vehicle speed calculated from the number of pulses of a tire pulse sensor and the tire diameter. It is to be appreciated that the system may comprise further operational modules supplementing dead reckoning based position tracking, such as a tyre slipping and/or wear compensation module.

Since error is accumulated by DR, the DR based position or positioning may be corrected by another positioning source. While in the surface section 2, satellite 50 visibility enables to correct positioning of the vehicle 10 based on position obtained by the GNSS device 30. While in the underground section 3, environment based scanning may be used to correct the DR based positioning, such as the positioning based on the scanner 40 and the mapping of scanned tunnel profile data from 2D or 3D scanner and the environment model.

At many worksites comprising underground and surface sections, a fleet of vehicles needs to drive between these sections at challenging conditions, e.g. haul excavated rock to a surface unloading position, such as a crusher or a stock pile in paddock area. Transition (or portal) area between underground and surface sections is often at a fairly steep slope, and stopping especially of a loaded vehicle is to be avoided. However, transitioning between underground and open air positioning is challenging. One challenge is that transition to GNSS based positioning system is slow, in a worst case scenario even over 60 seconds. While the vehicle is in the underground section, satellite data may get outdated, and re-obtaining satellite data upon again transitioning to the surface section 2 the may be very slow. Even if the satellite data would be up-to-date, satellite signal reacquisition is fairly slow, may take up to 15 seconds. It is very important to have reliable position information at all points of (underground-surface) transition areas to avoid collisions and stopping of the vehicle. A particular challenge is how and when to switch between underground and open-air positioning methods, which are technically very different.

There are now provided further improvements for positioning control, as further illustrated below.

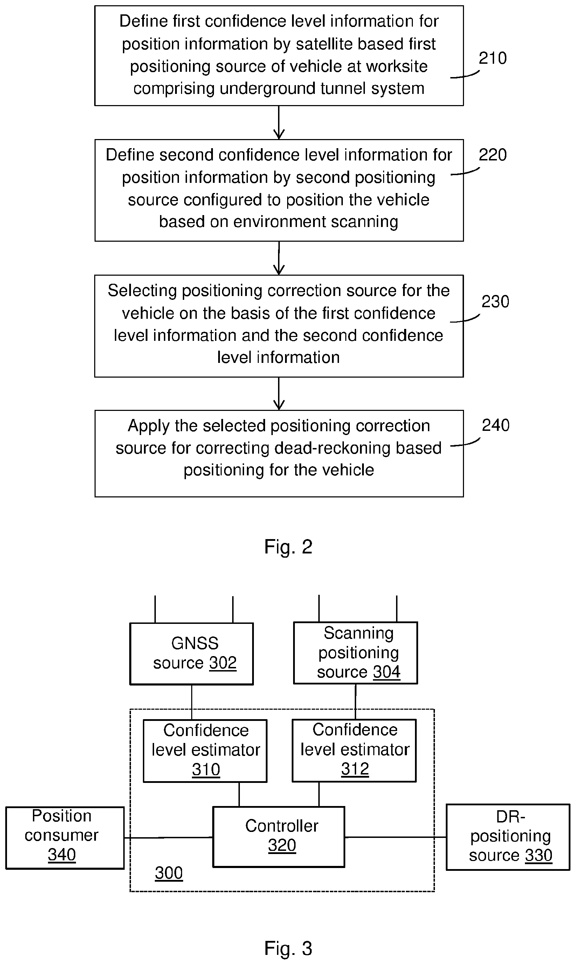

Figure 2 illustrates a method for controlling positioning according to some embodiments. The method may be performed by a vehicle and a controlling apparatus thereof, such as the vehicle 10, and by the control unit 20 thereof.

The method may comprise defining 210 first confidence level information for position information by a satellite based first positioning source of a vehicle at a worksite comprising an underground tunnel system. Block 220 comprises defining second confidence level information for position information by a second positioning source configured to position the vehicle based on environment scanning. A positioning correction source is selected 230 for the vehicle on the basis of the first confidence level information and the second confidence level information. Reliability or quality of the positioning sources may thus be reviewed or compared on the basis of processing of the first and the second confidence level information. The selected positioning correction source is applied 240 for correcting DR-based positioning for the vehicle.

When two position estimates are available, the one from the selected positioning correction source may then be used in or after block 240 for correcting the DR-based positioning. The method may be continuously repeated, e.g. at preconfigured time intervals, when there is need to correct the DR-based position, or even every time when new position estimates are available.

An optimal positioning source may be selected for correcting positing by DR, in particular when transitioning between surface section 2 and underground section 3 of a worksite. Interruptions and stopping of an autonomously operating vehicle due to non-available positioning correction may thus be minimized or avoided, improving production efficiency and affecting other vehicles at the same route. For example, switching due to reduced quality of current positioning source to another positioning source with very low confidence level may be avoided, but positioning based on the current positioning source even at reduced confidence level may be temporarily allowed. Furthermore, additional infrastructure, such as GNSS signal repeaters at the transition areas may be avoided or minimized.

Comparable first confidence level value and second confidence score or level value may be generated on the basis of processing information explicitly or implicitly indicative of position information accuracy or quality from the first positioning source and second positioning source, respectively. Such quality information may comprise error estimate and/or correlation information (e.g. between measured position points and map position points), for example. The processing may involve parameterization and/or weighting of input information from the respective position source, such as analysis of scanning results distribution, some further examples being illustrated later. Positioning source and method specific confidence information/value generation algorithms and configurations may be configured e.g. to the control unit 20 to generate the comparable confidence values.

Such comparable first and second confidence level values may be generated in blocks 210 and 220, respectively. Alternatively, the comparable values are generated after block 220 on the basis of the first confidence level information and the second confidence level information. The comparable confidence values enable comparison of current quality and confidence of the fundamentally very different positioning sources may be compared in block 230.

In addition to or instead of (directly) comparing the confidence values, one or more further criterion or conditions and associated trigger or threshold values may be applied in block 230 for changing from the currently applied positioning correction source and selecting the source, some examples being illustrated below. In a simple example, the positioning correction source is changed in response to confidence level of currently applied positioning correction source meeting a position source change threshold value, i.e. is not reliable any more. Thus, although the other positioning source does not either have a high reliability value, it may still be selected if the currently applied positioning source is too unreliable. However, if both first and second confidence values meet a position source change threshold value, the vehicle may be permitted to proceed based for a maximum allowed distance (without position correction), or a stop command may be issued.

One criterion may be amount of difference between the comparable confidence level values. The first confidence level information and the second confidence level information are or are processed into comparable values. The positioning correction source may thus be selected 230 based on difference between the first confidence level and the second confidence level. In a simple example, applied positioning correction source is changed from first source to the second source in response to the confidence level of the first source being at least 20% less than that of the second source.

However, when position estimate is available from both positioning sources and the overall positioning system applies same coordinate system for both positioning sources, such threshold value may be omitted or kept low, since it may not be that problematic if the positioning correction method and source is changed back and forth. Due to the substantially differing characteristics of the associated positioning techniques, different criterion and threshold values may be preconfigured for the positioning sources, and depending on if the currently applied positioning correction source is satellite-based or scanning-based. One or more (positioning correction) source selection configuration parameters may thus be applied in block 230. One or more confidence configuration parameters affecting the confidence level information definition may be applied in blocks 210 and 220. At least some of the parameters may be dynamically adapted.

Figure 3 illustrates an example of operational modules for controlling positioning according to some example embodiments. A GNSS source 302 and a scanning (based) positioning source 304 are connected to a vehicle positioning control module or unit 300, which may be implemented e.g. by the control unit 20 of the vehicle 10. The control unit 300 comprises a GNSS confidence level estimator 310, which may perform block 210 and define the confidence level for the GNSS-based position source 302, such as a GPS receiver device. The control unit 300 comprises a scanning confidence level estimator 312, which may perform block 220 and define the confidence level for the environment scanning based position source 304, such as a module or unit generating position estimate based on mapping operational scanned tunnel profile data from scanner(s) 40 to reference profile data stored in an environment model.

The estimators 310, 312 may provide their respective confidence level values to a controller 320, which may be configured to operate at least as a positioning source selector performing block 230 and cause block 240. The controller 320, or another module in the unit 300 or the vehicle 10, may host a positioning service or provider, configured to determine or receive DR-based position estimate based on information from DR-positioning source 330 and correct the estimate on the basis of the selected positioning correction source. The control unit 300, such as the controller 320 may be configured to define and/or accumulate DR-based positioning error. Alternatively, the DR-position source may accumulate the error and indicate it to the controller 320. The controller 320 may be configured to control DR-position correction and/or the correction source selection, in some embodiments based on the DR-positioning error reaching a correction threshold, or a preconfigured time period or travelled distance threshold since the previous correction being reached.

The positioning service may provide current position of the vehicle 10 to one or more position consumers 340. A navigation/travel controller or automatic driving controller of the vehicle may be the position information consumer 340, and apply the position information to generate steering commands for guiding the vehicle to a subsequent route point of a route plan. The vehicle may also comprise or be connected to other module(s), which may utilize the position information, such as a specific collision avoidance control module, a task manager (may be configured to assign work tasks for a fleet of vehicles and update and/or monitor task performance and status), a visualizer module (to generate at least some display views for an operator (locally and/or remotely), a remote monitoring and control module, etc.

In GPS embodiments, the positioning source 302 comprises a GPS (receiver) device which detects the position (the GPS position) of the vehicle 10 by detecting the position (the GPS position) of an antenna of the GPS device. The first confidence level may be defined in block 210 by processing quality information from the GPS device. Such quality information may be indicative of received signal quality, and may comprise error estimate information, for example.

The GPS device may detect a Fix solution, a Float solution, or a Single solution indicating the accuracy of the detected GPS position. This may be based on the number of the positioning satellites from which the antenna has received information, for example, in the process of detecting the position of the antenna.

In simplified example scenarios, when the accuracy of the GPS position is Fix solution, the vehicle 10 will select GPS position over the scanning based position. Thus, full or 100% confidence may be assumed for GPS position selected over the scanning based position, However, when the accuracy of the GPS position is Float or Single solution, the methods may be compared by applying the method of Figure 2. Scanning based position may thus often be selected, unless the scanning based position has high inaccuracy. The GPS receiver may output a signal indicating No solution when the GPS position cannot be measured. Thus, the scanning-based positioning update is used if position estimate with adequate confidence level is available, or the DR-based positioning is continued (as long as allowed by DR positioning control configuration or until adequate position estimate is available from either positioning correction source.

The quality information from the GPS device may comprise real-time kinematic correction information and/or error variance information (which may be in an error ellipse). Error ellipse is related to the positioning confidence level or integrity by horizontal position error (HPE) cumulative distribution function.

In some embodiments, the first and/or second confidence level is defined 210, 220 by processing an error estimate for the associated position information (by the first or second positioning source) on the basis of a target positioning accuracy parameter, such as comparing an error estimate value to one or more error threshold or characterization values.

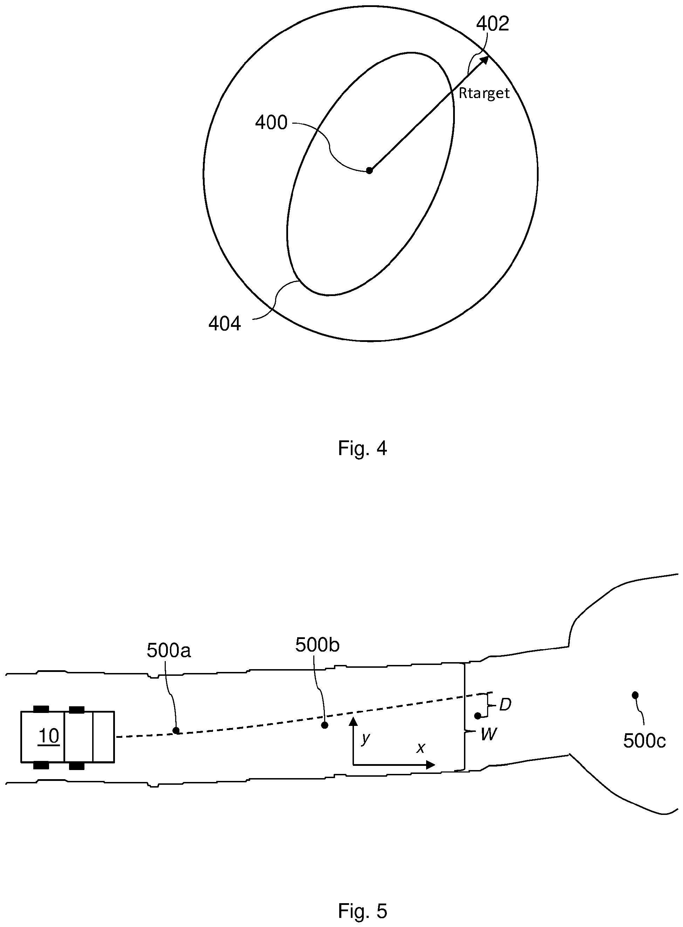

With reference to Figure 4, in an embodiment, the first confidence level information is defined based on computed probability of correct position residing within a target radius 402 from a reported position 400 (i.e. position reported by the GPS device).

1-sigma error estimate may be received from the GPS device, illustrated by ellipse 404. 1-sigma error may indicate that the correct position has smaller error compared to the reported position within the ellipse in 67% probability, standard deviation. The first first confidence level information may be defined by processing the received 1-sigma error estimate. GPS positioning confidence may be computed based on parametrized target accuracy, illustrated in the simple example of Figure 4 by Rtarget 402. Based on standard deviation, it is possible to calculate the probability that the correct position is within the configured target radius 402 from the reported position 400. This probability may be applied as the position confidence level for GPS, or the final confidence level value may be calculated based on the probability.

The second positioning source 304 or the control unit 20, 300 may be configured to compare scanned tunnel profile data to reference profile data stored in an environment model (map data) and define information indicative of (amount or level of) correlation between them. In some embodiments, the second confidence level information is defined 220 on the basis of level of correlation between the scanned tunnel profile data (represented by measurement points) and the reference profile data (of the environment model). Some example embodiments are illustrated below.

Vehicle properties, including machine dimensions, dynamic vehicle state parameters, including vehicle articulation angle, and DR-based position estimate may be applied as input parameters in finding matching between points of an environment model portion (based on the DR-based position estimate) and scanned measurement points.

In an example embodiment, an intensity (or correlation) table (or another suitable form of information for processing) indicative of scanned tunnel profile data correlation to environment model data may be generated (by the scanning positioning source 304 or the control unit 20, 300). Distance between a (scanned) measurement point and closest environment model point may be determined for each measurement point. This may be performed in lateral 2D plane in respect of the vehicle, in x and y directions. Information based on such shortest distances may be stored in the table, and the second position confidence level information/value may be generated on the basis of processing the entries of the table indicative of the correlation.In some embodiments, weighting is configured in the system and applied in or after blocks 210 and 220. At least some of the position estimate information received from the first positioning source and/or the second positioning source may be weighted, or the first and/or second confidence values are weighted. The positioning correction source selection may then be performed based on the weighted values. A first confidence value may be defined by weighting position estimate information received from the first positioning source by a first weighting input. A second confidence value may be defined by weighting position estimate information received from the second positioning source by a second weighting input. The first confidence value and/or the second confidence value is/are applied for the selecting of the applied positioning information source.

Figure 5 illustrates a top-view example of the vehicle 10 driving along a route defined by a set of route points 500a, 500b, 500c. The broken line illustrates an example path and deviation from the route points caused by DR-positioning error.

In some embodiments, the control unit 20 or the controller 320 accumulates for DR-based positioning latitudinal error (in direction y) and longitudinal error (direction x in the direction of driving) after reset at the previous position correction while the vehicle 10 is moving. In an embodiment, the longitudinal and/or latitudinal error is estimated on the basis of recent historical error correction to DR-based positioning by the scanning-based positioning, e.g. such historical error correction data recorded for a predetermined time or distance. Thus, positioning error estimation and/or associated threshold setting may be adapted based on amount of correction required at one or more earlier correction events, i.e. difference(s) between the DR-based position and scanning-based position.

The accumulated latitudinal and/or longitudinal error(s) may be compared to maximum allowed error threshold value(s), which may also be referred to or associated with safety margin for the vehicle. In response to a maximum allowed error threshold value(s) being exceeded, and if no position correction with adequate confidence level is available from either position correction source 302, 304, the vehicle 10 may be stopped or speed further reduced. Monitoring of the latitudinal error is particularly relevant in underground tunnels. For example, when the accumulated latitudinal error exceeds safety margin D, the vehicle may be controlled to stop. The error threshold(s) applied may be configurable. In some embodiments, the error threshold(s) are automatically configured based on the environment traversed by the vehicle and/or properties of the vehicle. The error threshold(s) may be configured on the basis of the environment model, route model, and/or path traversed by the vehicle. In an example, width of the tunnel $W$ is estimated on the basis of the environment model and the error threshold $ET$ may define maximum allowed estimated vehicle distance from a wall and may be defined:

$$ET = W - (D + VW \text{ (vehicle width)})$$

In some embodiments, time of the vehicle and/or distance travelled by the vehicle since the previous position update is monitored. The vehicle is controlled to stop in response to detecting that a maximum time or maximum distance is reached.

In some embodiments, speed reduction for the vehicle 10 is controlled in response to both positioning sources 302, 304 indicating weak or weakening confidence, e.g. both the first and second confidence values meeting a preconfigured slowdown threshold value. For example, the control unit 20 may reduce speed of the vehicle to a value in the range 2 to 10 km/h in such case. The control unit 20 may set a speed limit for the vehicle. The speed of the vehicle may be reduced gradually to the associated value or range.

It is to be appreciated that various further features may be complement or differentiate at least some of the above-illustrated embodiments. For example, there may be further user interaction and/or automation functionality further facilitating the operator to monitor the vehicle, select appropriate action to overcome an issue regarding lacking accurate position information, and control the vehicle.

In an embodiment, position of the vehicle 10 in the transition area may be updated on the basis of an external location reference unit, if available. The location reference unit may be a wireless signal emission unit at a tunnel wall or a location tracking unit of another vehicle, for example. An RF tag, an access point, a visually readable code or another fixed unit, the location of which is accurately known may serve as the location reference. Reference is also made to US7899599 disclosing that such identifier may be applied to update dead reckoning based location.

An electronic device comprising electronic circuitries may be an apparatus for realizing at least some embodiments illustrated above, such as the method illustrated in connection with Figure 2 and features illustrated for the control unit 20. The apparatus may be comprised in at least one computing device connected to or integrated into a control system of the vehicle. Such control system may be an intelligent on-board control system controlling operation of various sub-systems of the vehicle, such as a hydraulic system, a motor, etc. Such control systems are often distributed and include many independent modules connected by a bus system of controller area network (CAN) nodes, for example.

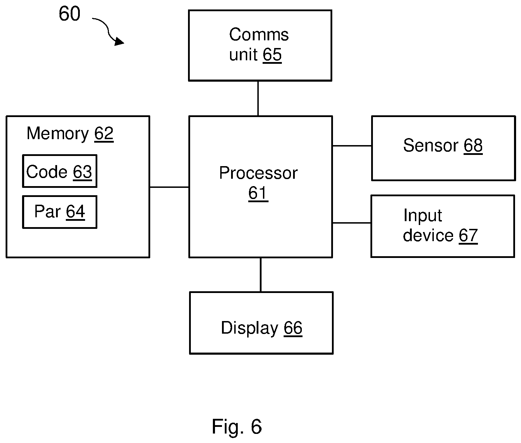

Figure 6 illustrates a simplified example apparatus capable of supporting at least some embodiments of the present invention. Illustrated is a device 60, which may be configured to carry out at least some of the above-illustrated embodiments relating to positioning control. In some embodiments, the device 60 comprises or implements the control unit 20, or other module(s), functions and/or unit(s) for performing at least some of the above-illustrated embodiments.

Comprised in the device 60 is a processor 61, which may comprise, for example, a single- or multi-core processor. The processor 61 may comprise more than one processor. The processor may comprise at least one application-specific integrated circuit, ASIC. The processor may comprise at least one field-programmable gate array, FPGA. The processor may be configured, at least in part by computer instructions, to perform actions.

The device 60 may comprise memory 62. The memory may comprise random-access memory and/or permanent memory. The memory may be at least in part accessible to the processor 61. The memory may be at least in part comprised in the processor 61. The memory may be at least in part external to the device 60 but accessible to the device. The memory 62 may be means for storing information, such as parameters 64 affecting operations of the device. The parameter information in particular may comprise parameter information affecting the positioning control related features, such as threshold values.

The memory 62 may be a non-transitory computer readable medium comprising computer program code 63 including computer instructions that the processor 61 is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The processor may, together with the memory and computer program code, form means for performing at least some of the above-illustrated features in the device, such as the method of Figure 2.

The device 60 may comprise a communications unit 65 comprising a transmitter and/or a receiver. The transmitter and the receiver may be configured to transmit and receive, respectively, i.a. data and control commands within or outside the vehicle. The transmitter and/or receiver may be configured to operate in accordance with global system for mobile communication, GSM, wideband code division multiple access, WCDMA, long term evolution, LTE, 3GPP new radio access technology (N-RAT), wireless local area network, WLAN, a non-terrestrial communication standard, and/or Ethernet standards, for example. The device 60 may comprise a near-field communication, NFC, transceiver. The NFC transceiver may support at least one NFC technology, such as NFC, Bluetooth, or similar technologies.

The device 60 may comprise or be connected to a UI. The UI may comprise at least one of a display 66, a speaker, an input device 67 such as a keyboard, a joystick, a touchscreen, and/or a microphone. The UI may be configured to display views on the basis of above illustrated embodiments. A user may operate the device and control at least some of above illustrated features. In some embodiments, the user may control the vehicle 10 via the UI, for example to manually drive the vehicle, operate a boom, change driving mode, change display views, modify parameters 64, etc.

The device 60 may further comprise and/or be connected to further units, devices and systems, such as one or more sensor devices 68, such as the scanner(s) 40 or other sensor devices sensing environment of the device 60 or properties of the vehicle, such wheel rotation or orientation changes.

The processor 61, the memory 62, the communications unit 65 and the UI may be interconnected by electrical leads internal to the device 60 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

References throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, elements, and/or materials may be presented in a common list for convenience. However, these lists should be construed as though each member of the list is individually identified as a separate and unique member. Furthermore, the described features, items, elements, or characteristics may be combined in any suitable manner in one or more embodiments.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

## Claims

1. An apparatus for controlling positioning of a vehicle (10) transitioning between an underground section and a surface section of a worksite (1) comprising an underground tunnel system, the apparatus comprising means configured for performing:

   - defining (210) first confidence level information for position information by a satellite based first positioning source (302) of the vehicle (10),
   - defining (220) second confidence level information for position information by a second positioning source (304) configured to position the vehicle based on environment scanning,
   - generating, on the basis of the first confidence level information and the second confidence level information, a first confidence level value and a second confidence level value, respectively,
   - selecting (230) a positioning correction source for the vehicle on the basis of the first confidence level value and the second confidence level value, and
   - applying (240) the selected positioning correction source for correcting dead-reckoning based positioning for the vehicle transitioning between the underground section and the surface section.

2. The apparatus of claim 1, wherein the means are configured for performing: defining the first confidence value on the basis of processing position estimate information from the first positioning source (302) and the second confidence value on the basis of processing position estimate information from the second positioning source (304), and comparing the first confidence value and the second confidence value for the selecting of the applied positioning information source.

3. The apparatus of claim 2, wherein the processing comprises weighting at least some of the position estimate information or the confidence values before selecting (230) the positioning correction source.

4. The apparatus of any preceding claim, wherein the means are configured to define (210) the first confidence level on the basis of quality information from a global navigation satellite system unit (302).

5. The apparatus of claim 4, wherein the means are configured to receive an error estimate from a global positioning system device and define (210) the first confidence level by processing the error estimate on the basis of a target positioning accuracy parameter.

6. The apparatus of claim 5, wherein the first confidence level information is defined (210) based on computed probability of correct position residing within a target radius from a reported position.

7. The apparatus of any preceding claim, wherein the second positioning source (304) is configured to compare scanned tunnel profile data to reference profile data stored in an environment model, and the means are configured to define the second confidence level information on the basis of level of correlation between the scanned tunnel profile data and the reference profile data.

8. The apparatus of any preceding claim, wherein the apparatus is a loading and/or hauling vehicle or a drilling rig configured to operate autonomously.

9. A method for controlling positioning of a vehicle (10) transitioning between an underground section and a surface section of at a worksite (1) comprising an underground tunnel system, the method comprising:

   - defining (210) first confidence level information for position information by a satellite based first positioning source (302) of the vehicle,
   - defining (220) second confidence level information for position information by a second positioning source (304) configured to position the vehicle based on environment scanning,
   - generating, on the basis of the first confidence level information and the second confidence level information, a first confidence level value and a second confidence level value, respectively,
   - selecting (230) a positioning correction source for the vehicle on the basis of the first confidence level value and the second confidence level value, and
   - applying (240) the selected positioning correction source for correcting dead-reckoning based positioning for the vehicle transitioning between the underground section and the surface section.

10. The method of claim 9, further comprising: defining the first confidence value on the basis of processing position estimate information from the first positioning source (302) and the second confidence value on the basis of processing position estimate information from the second positioning source (304), and comparing the first confidence value and the second confidence value for the selecting of the applied positioning information source.

11. The method of claim 9 or 10, wherein the first confidence level is defined (210) on the basis of quality information from a global navigation satellite system unit (302).

12. The method of claim 11, wherein an error estimate is received from a global positioning system device and the first confidence level is defined (210) by processing the error estimate on the basis of a target positioning accuracy parameter.

13. The method of claim 12, wherein the first confidence level information is defined based on computed probability of correct position residing within a target radius from a reported position.

14. The method of any preceding claim, wherein the second positioning source (304) compares scanned tunnel profile data to reference profile data stored in an environment model, and the second confidence level information is defined (220) on the basis of level of correlation between the scanned tunnel profile data and the reference profile data.

15. A computer program comprising code for, when executed in a data processing apparatus (60), causing the method of any one of claims 9 to 14 to be performed.

**Patentansprüche**

1. Einrichtung zur Steuerung der Positionierung eines Fahrzeugs (10), das zwischen einem unterirdischen Abschnitt und einem oberirdischen Abschnitt einer Baustelle (1) übergeht, die ein unterirdisches Tunnelsystem umfasst, wobei die Einrichtung Mittel umfasst, die konfiguriert sind, um Folgendes durchzuführen:

   - Definieren (210) von ersten Konfidenzniveau-Informationen für Positionsinformationen durch eine satellitenbasierte erste Positionierungsquelle (302) des Fahrzeugs (10),
- Definieren (220) von zweiten Konfidenzniveau-Informationen für Positionsinformationen durch eine zweite Positionierungsquelle (304), die so konfiguriert ist, dass sie das Fahrzeug auf der Grundlage einer Umgebungsabtastung positioniert,
- Erzeugen eines ersten Konfidenzniveaus und eines zweiten Konfidenzniveaus auf der Grundlage der ersten und zweiten Konfidenzniveau-Informationen,
- Auswählen (230) einer Positionskorrekturquelle für das Fahrzeug auf der Grundlage des ersten Konfidenzniveaus und des zweiten Konfidenzniveaus, und
- Anwenden (240) der ausgewählten Positionskorrekturquelle zum Korrigieren der auf der Koppelnavigation basierenden Positionierung für das Fahrzeug beim Übergang zwischen dem unterirdischen Abschnitt und dem überirdischen Abschnitt.

2. Einrichtung nach Anspruch 1, wobei die Mittel konfiguriert sind, um Folgendes durchzuführen: Definieren des ersten Konfidenzwerts auf der Grundlage der Verarbeitung von Positionsschätzungsinformationen von der ersten Positionierungsquelle (302) und des zweiten Konfidenzwerts auf der Grundlage der Verarbeitung von Positionsschätzungsinformationen von der zweiten Positionierungsquelle (304), und Vergleichen des ersten Konfidenzwerts und des zweiten Konfidenzwerts für die Auswahl der angewendeten Positionierungsinformationsquelle.

3. Einrichtung nach Anspruch 2, wobei die Verarbeitung das Gewichten mindestens einiger der Positionsschätzungsinformationen oder der Konfidenzwerte vor der Auswahl (230) der Positionskorrekturquelle umfasst.

4. Einrichtung nach einem der vorstehenden Ansprüche, wobei die Mittel so konfiguriert sind, dass sie das erste Konfidenzniveau auf der Grundlage von Qualitätsinformationen von einer globalen Navigationssatelliten-Systemeinheit (302) definieren (210).

5. Einrichtung nach Anspruch 4, wobei die Mittel so konfiguriert sind, dass sie eine Fehlerabschätzung von einer globalen Positionierungssystemvorrichtung empfangen und das erste Konfidenzniveau durch Verarbeiten der Fehlerabschätzung auf der Grundlage eines Zielpositionierungsgenauigkeitsparameters definieren (210).

6. Einrichtung nach Anspruch 5, wobei die ersten Konfidenzniveau-Informationen auf der Grundlage der berechneten Wahrscheinlichkeit, dass die korrekte Position innerhalb eines Zielradius von einer gemeldeten Position liegt, definiert sind (210).

7. Einrichtung nach einem der vorstehenden Ansprüche, wobei die zweite Positionierungsquelle (304) so konfiguriert ist, dass sie gescannte Tunnelprofildaten mit Referenzprofildaten vergleicht, die in einem Umgebungsmodell gespeichert sind, und die Mittel so konfiguriert sind, dass sie die zweiten Konfidenzniveau-Informationen auf der Grundlage des Niveaus der Korrelation zwischen den gescannten Tunnelprofildaten und den Referenzprofildaten definieren.

8. Einrichtung nach einem der vorstehenden Ansprüche, wobei es sich bei der Einrichtung um ein Lade- und/oder Transportfahrzeug oder eine Bohranlage handelt, die für den autonomen Betrieb konfiguriert ist.

9. Verfahren zur Steuerung der Positionierung eines Fahrzeugs (10), das zwischen einem unterirdischen Abschnitt und einem oberirdischen Abschnitt einer Baustelle (1) übergeht, die ein unterirdisches Tunnelsystem umfasst, wobei das Verfahren Folgendes umfasst:

- Definieren (210) von ersten Konfidenzniveau-Informationen für Positionsinformationen durch eine satellitenbasierte erste Positionierungsquelle (302) des Fahrzeugs,
- Definieren (220) von zweiten Konfidenzniveau-Informationen für Positionsinformationen durch eine zweite Positionierungsquelle (304), die so konfiguriert ist, dass sie das Fahrzeug auf der Grundlage einer Umgebungsabtastung positioniert,
- Erzeugen eines ersten Konfidenzniveaus und eines zweiten Konfidenzniveaus auf der Grundlage der ersten und zweiten Konfidenzniveau-Informationen,
- Auswählen (230) einer Positionskorrekturquelle für das Fahrzeug auf der Grundlage des ersten Konfidenzniveaus und des zweiten Konfidenzniveaus, und
- Anwenden (240) der ausgewählten Positionskorrekturquelle zum Korrigieren der auf der Koppelnavigation basierenden Positionierung für das Fahrzeug beim Übergang zwischen dem unterirdischen Abschnitt und dem überirdischen Abschnitt.

10. Verfahren nach Anspruch 9, weiter umfassend: Definieren des ersten Konfidenzwerts auf der Grundlage der Verarbeitung von Positionsschätzungsinformationen von der ersten Positionierungsquelle (302) und des zweiten Konfidenzwerts auf der Grundlage der Verarbeitung von Positionsschätzungsinformationen von der zweiten Positionierungsquelle (304), und Vergleichen des ersten Konfidenzwerts und des zweiten Konfidenzwerts für die Auswahl der angewendeten Positionierungsinformationsquelle.

11. Verfahren nach Anspruch 9 oder 10, wobei das erste Konfidenzniveau auf der Grundlage von Qualitätsinformationen von einer globalen Navigationssatelliten-Systemeinheit (302) definiert wird (210).

12. Verfahren nach Anspruch 11, wobei eine Fehlerabschätzung von einer globalen Positionierungssystemvorrichtung empfangen wird und das erste Konfidenzniveau durch Verarbeitung der Fehlerabschätzung auf der Grundlage eines Zielpositionierungsgenauigkeitsparameters definiert wird (210).

13. Verfahren nach Anspruch 12, wobei die ersten Konfidenzniveau-Informationen auf der Grundlage der berechneten Wahrscheinlichkeit einer korrekten Position innerhalb eines Zielradius von einer gemeldeten Position aus definiert sind.

14. Verfahren nach einem der vorstehenden Ansprüche, wobei die zweite Positionierungsquelle (304) gescannte Tunnelprofildaten mit Referenzprofildaten vergleicht, die in einem Umgebungsmodell gespeichert sind, und die zweiten Konfidenzniveau-Informationen auf der Grundlage des Korrelationsniveaus zwischen den gescannten Tunnelprofildaten und den Referenzprofildaten definiert werden (220).

15. Computerprogramm, das einen Code umfasst, der bei Ausführung in einer Datenverarbeitungseinrichtung (60) die Durchführung des Verfahrens nach einem der Ansprüche 9 bis 14 bewirkt.

**Revendications**

1. Appareil pour commander le positionnement d'un véhicule (10) effectuant une transition entre une section souterraine et une section en surface d'un chantier (1) comprenant un système de tunnel souterrain, l'appareil comprenant des moyens configurés pour réaliser :

   - la définition (210) de premières informations de niveau de confiance pour des informations de position par une première source de positionnement (302), basée sur un satellite, du véhicule (10),
   - la définition (220) de secondes informations de niveau de confiance pour des informations de position par une seconde source de positionnement (304) configurée pour positionner le véhicule sur la base d'un balayage d'environnement,
   - la génération, sur la base des premières informations de niveau de confiance et des secondes informations de niveau de confiance, d'une première valeur de niveau de confiance et d'une seconde valeur de niveau de confiance, respectivement,
   - la sélection (230) d'une source de correction de positionnement pour le véhicule sur la base de la première valeur de niveau de confiance et de la seconde valeur de niveau de confiance, et
   - l'application (240) de la source de correction de positionnement sélectionnée pour corriger un positionnement basé sur la navigation à l'estime pour le véhicule effectuant une transition entre la section souterraine et la section en surface.

2. Appareil selon la revendication 1, dans lequel les moyens sont configurés pour réaliser : la définition de la première valeur de confiance sur la base d'un traitement d'informations d'estimation de position en provenance de la première source de positionnement (302) et de la seconde valeur de confiance sur la base d'un traitement d'informations d'estimation de position en provenance de la seconde source de positionnement (304), et la comparaison de la première valeur de confiance et de la seconde valeur de confiance pour la sélection de la source d'informations de positionnement appliquée.

3. Appareil selon la revendication 2, dans lequel le traitement comprend la pondération d'au moins une partie des informations d'estimation de position ou des valeurs de confiance avant la sélection (230) de la source de correction de positionnement.

4. Appareil selon une quelconque revendication précédente, dans lequel les moyens sont configurés pour définir (210) le premier niveau de confiance sur la base d'informations de qualité en provenance d'une unité de système mondial de navigation par satellite (302).

5. Appareil selon la revendication 4, dans lequel les moyens sont configurés pour recevoir une estimation d'erreur en provenance d'un dispositif de système mondial de positionnement et définir (210) le premier niveau de confiance en traitant l'estimation d'erreur sur la base d'un paramètre de précision de positionnement cible.

6. Appareil selon la revendication 5, dans lequel les premières informations de niveau de confiance sont définies (210) sur la base d'une probabilité calculée de position correcte résidant au sein d'un rayon cible à partir d'une position rapportée.

7. Appareil selon une quelconque revendication précédente, dans lequel la seconde source de positionnement (304) est configurée pour comparer des données de profil de tunnel balayé à des données de profil de référence stockées dans un modèle d'environnement, et les moyens sont configurés pour définir les secondes informations de niveau de confiance sur la base d'un niveau de corrélation entre les données de profil de tunnel balayé et les données de profil de référence.

8. Appareil selon une quelconque revendication précédente, dans lequel l'appareil est un véhicule de chargement et/ou de roulage ou un appareil de forage configuré pour fonctionner de manière autonome.

9. Procédé de commande du positionnement d'un véhicule (10) effectuant une transition entre une section souterraine et une section en surface d'un chantier (1) comprenant un système de tunnel souterrain, le procédé comprenant :

    - la définition (210) de premières informations de niveau de confiance pour des informations de position par une première source de positionnement (302), basée sur un satellite, du véhicule,
    - la définition (220) de secondes informations de niveau de confiance pour des informations de position par une seconde source de positionnement (304) configurée pour positionner le véhicule sur la base d'un balayage d'environnement,
    - la génération, sur la base des premières informations de niveau de confiance et des secondes informations de niveau de confiance, d'une première valeur de niveau de confiance et d'une seconde valeur de niveau de confiance, respectivement,
    - la sélection (230) d'une source de correction de positionnement pour le véhicule sur la base de la première valeur de niveau de confiance et de la seconde valeur de niveau de confiance, et
    - l'application (240) de la source de correction de positionnement sélectionnée pour corriger un positionnement basé sur la navigation à l'estime pour le véhicule effectuant une transition entre la section souterraine et la section en surface.

10. Procédé selon la revendication 9, comprenant en outre : la définition de la première valeur de confiance sur la base d'un traitement d'informations d'estimation de position en provenance de la première source de positionnement (302) et de la seconde valeur de confiance sur la base d'un traitement d'informations d'estimation de position en provenance de la seconde source de positionnement (304), et la comparaison de la première valeur de confiance et de la seconde valeur de confiance pour la sélection de la source d'informations de positionnement appliquée.

11. Procédé selon la revendication 9 ou 10, dans lequel le premier niveau de confiance est défini (210) sur la base d'informations de qualité en provenance d'une unité de système mondial de navigation par satellite (302).

12. Procédé selon la revendication 11, dans lequel une estimation d'erreur est reçue en provenance d'un dispositif de système mondial de positionnement et le premier niveau de confiance est défini (210) en traitant l'estimation d'erreur sur la base d'un paramètre de précision de positionnement cible.

13. Procédé selon la revendication 12, dans lequel les premières informations de niveau de confiance sont définies sur la base d'une probabilité calculée de position correcte résidant au sein d'un rayon cible à partir d'une position rapportée.

14. Procédé selon une quelconque revendication précédente, dans lequel la seconde source de positionnement (304) compare des données de profil de tunnel balayé à des données de profil de référence stockées dans un modèle d'environnement, et les secondes informations de niveau de confiance sont définies (220) sur la base d'un niveau de corrélation entre les données de profil de tunnel balayé et les données de profil de référence.

15. Programme informatique comprenant un code pour, lorsqu'il est exécuté dans un appareil de traitement de données (60), amener le procédé selon l'une quelconque des revendications 9 à 14 à être réalisé.

Fig. 1

Define first confidence level information for position information by satellite based first positioning source of vehicle at worksite comprising underground tunnel system ⌐ 210

Define second confidence level information for position information by second positioning source configured to position the vehicle based on environment scanning ⌐ 220

Selecting positioning correction source for the vehicle on the basis of the first confidence level information and the second confidence level information ⌐ 230

Apply the selected positioning correction source for correcting dead-reckoning based positioning for the vehicle ⌐ 240

Fig. 2

GNSS source 302

Scanning positioning source 304

Confidence level estimator 310

Confidence level estimator 312

Position consumer 340

Controller 320

DR-positioning source 330

300

Fig. 3

Fig. 4

Fig. 5

Fig. 6

**EP 3 961 340 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015106799 A
- US 2017122741 A
- US 2018074201 A
- EP 2169507 A
- US 7899599 B